# FASCICULE DE BREVET EUROPEEN

(11) **EP 4 453 740 B1**
(45) Date de publication et mention de la délivrance du brevet: **29.10.2025**
(21) Numéro de dépôt: 22838864.1
(22) Date de dépôt: 22.12.2022
(51) Int. Cl.: G06F 12/1027, G06F 12/1081, G06F 12/126

(54) **SYSTÈME SUR PUCE COMPRENANT AU MOINS UNE IOMMU SÉCURISÉE**
SYSTEM-ON-CHIP MIT MINDESTENS EINEM SICHEREN IOMMU
SYSTEM-ON-CHIP COMPRISING AT LEAST ONE SECURE IOMMU

(30) Priorité: 23.12.2021 FR 2114333
(43) Date de publication de la demande: 30.10.2024
(73) Titulaire: Thales, 92190 Meudon (FR); SORBONNE UNIVERSITE, 75006 Paris (FR); Centre National de la Recherche Scientifique, 75016 Paris (FR)
(72) Inventeur: DUCOUSSO, Rieul, 91767 PALAISEAU Cedex (FR); GRACIA PEREZ, Daniel, 91767 PALAISEAU Cedex (FR); ENCRENAZ, Emmanuelle, 75252 PARIS Cedex (FR); MEUNIER, Quentin, 75252 PARIS Cedex (FR)
(74) Mandataire: Atout PI Laplace
(86) Numéro de dépôt international: PCT/EP2022/087407
(87) Numéro de publication internationale: WO 2023/118403

(56) Documents cités:
- EP-A1- 1 182 569
- WO-A1-2009/134390
- CN-A- 111 966 468
- FR-A1- 2 881 540
- US-A- 5 860 147
- US-A1- 2014 181 461
- US-A1- 2019 340 123
- US-A1- 2020 264 783

## Description

L'invention porte sur un système sur puce, ou SoC pour acronyme de "System on Chip" en langue anglaise, comprenant au moins une unité de gestion des accès à la mémoire partagée du processeur par des périphériques au système

L'invention s'applique aux processeurs munis d'interfaces pour des périphériques maîtres (i.e. des périphériques pouvant effectuer des requêtes à destination de la mémoire du processeur) sur le dispositif d'interconnexions des éléments du système sur puce, tel un bus de communication, un réseau sur puce ou NoC pour acronyme de "Network on Chip" en langue anglaise, ou un réseau d'interconnexions pour "Interconnect" en langue anglaise. La présente invention assure que le mécanisme de protection mémoire typiquement déployé sur les processeurs avec périphériques maîtres n'est pas exploité comme canal de communication caché entre les périphériques.

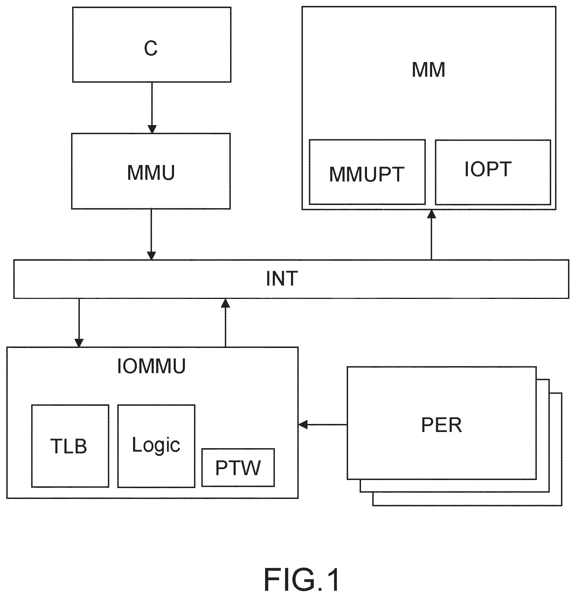

Comme cela est illustré sur la [Fig.1], les systèmes sur puce modernes munis de processeurs, offrent la capacité d'étendre les fonctionnalités du système avec des périphériques maîtres PER qui exploitent le même type d'interface de communication ou dispositif d'interconnexions INT que le ou les cœurs du processeur pour interagir avec le système, et notamment avec la mémoire principale MM. Pour éviter que les périphériques PER puissent accéder librement à tout l'espace mémoire du système, un processeur étant muni d'au moins un cœur C et éventuellement, voire souvent, d'au moins une unité de gestion de mémoire MMU, placent ces périphériques derrière un mécanisme de protection mémoire.

Le composant implémentant ce mécanisme est habituellement appelé unité de gestion des accès à la mémoire partagée du processeur par des périphériques ou IOMMU pour acronyme de "Input-Output memory management unit" en langue anglaise, mais peut parfois aussi avoir la dénomination de SMMU pour acronyme de "System Memory Management Unit" en langue anglaise, ou VT pour acronyme de "Virtualization Technology" en langue anglaise.

L'unité IOMMU de gestion des accès à la mémoire partagée du processeur par des périphériques PER au système est le pendant, pour les périphériques, de l'unité de gestion de mémoire MMU pour le ou les cœurs (C) du processeur.

Le partage d'une mémoire principale MM est décrit dans une table des pages d'entrées/sorties IOPT pour les périphériques PER et dans la table des pages d'unité de gestion mémoire MMUPT pour les processus s'exécutant sur le ou les cœurs C. Ces tables IOPT et MMUPT sont stockées en mémoire principale MM.

L'unité IOMMU de gestion des accès à la mémoire partagée du processeur par des périphériques PER, comprend une mémoire tampon TLB de traductions, pour acronyme de "Translation Lookaside Buffer" en langue anglaise, dont chaque entrée ou ligne correspond à une traduction d'une adresse virtuelle issue d'un périphérique en une adresse physique à destination du système. L'unité IOMMU de gestion des accès à la mémoire partagée du processeur comprend également un circuit logique Logic associé à la mémoire tampon TLB de traductions. L'unité IOMMU peut également comprendre un module PTW de pointeur courant, pour acronyme de "Page Table Walker" en langue anglaise, pour la mise à jour autonome (c'est-à-dire, sans l'intervention du processeur) de la mémoire tampon TLB.

Le système d'exploitation ou OS pour acronyme d' "Operating System" en langue anglaise, configure l'unité IOMMU pour définir les zones mémoires du système que les différents périphériques attachés à l'unité IOMMU peuvent accéder. Comme pour l'unité de gestion de mémoire MMU, des traductions peuvent être réalisées entre les adresses ou SPA pour acronyme de "System Physical Address" en langue anglaise, et les adresses des périphériques ou IOVA, pour acronyme de "Input/Output Virtual Address" en langue anglaise, qu'on appelle adresses virtuelles. D'autres services peuvent être fournis par l'unité IOMMU, mais n'ont pas besoin d'être décrits pour la présente invention.

Pour configurer l'accès à la mémoire partagée fourni par l'unité IOMMU, le système d'exploitation passe par l'intermédiaire de la table des pages d'entrées/sorties IOPT dans laquelle il définit les droits d'accès et traductions pour les différents périphériques. Cette table est gardée dans la mémoire (typiquement la DRAM) du système. Pour accélérer l'accès à cette table l'unité IOMMU implémente une mémoire tampon, TLB, dans laquelle les entrées les plus fréquemment utilisées sont gardées.

Grâce à l'unité IOMMU le système d'exploitation peut limiter les zones mémoires du système auxquelles les périphériques peuvent accéder, partager un espace d'adressage virtuel entre un processus et un périphérique, et garantir l'intégrité et la confidentialité des données des différentes applications et périphériques du système. Ceci permet aussi de s'assurer que deux périphériques pour lesquels le système d'exploitation a défini des zones de mémoire disjointes ne peuvent pas communiquer entre eux.

Malheureusement, les périphériques peuvent exploiter la mémoire tampon TLB de l'unité IOMMU pour connaitre les données qu'un autre périphérique manipule (attaque par canal auxiliaire ou "side-channel attack" en langue anglaise) ou pour se communiquer des données (attaque par canal caché ou "covert-channel attack" en langue anglaise). Pour cela des approches également utilisées pour mettre en place des attaques cryptographiques grâce à un canal secondaire qui utilise la synchronisation du tampon de traduction ou "TLBleed" en langue anglaise, ou une vulnérabilité matérielle de la prédiction de branchement de type "Spectre" ou "Meltdown" en langue anglaise peuvent être exploitées.

Les documents "Secure TLBs", de Shuwen Deng, Wenjie Xiong, et Jakub Szefer, Proceedings of the 46th International Symposium on Computer Architecture (ISCA), 2019, et US20200151111 A1, illustrent de tels systèmes sur puce de l'état de l'art. La publication US 2014/181461 A1 divulgue une unité de gestion de la mémoire d'entrée/sortie comprenant des champs de bits d'accès et d'usage pour chaque page virtuelles référencées au sein de l'unité.

Comme expliqué précédemment, l'unité IOMMU ne protège pas des attaques de type par canal auxiliaire ou par canal caché par des périphériques malveillants. Des implémentations existent qui visent à limiter ce type d'attaques, mais qui ne l'adressent pas directement, car elles ont été proposées pour d'autres raisons que la sécurité, comme des raisons de performance. Par exemple, plusieurs unités IOMMU peuvent être déployées dans un système sur puce, comme une unité IOMMU A et une unité IOMMU B, ce qui empêche un périphérique connecté sur l'unité IOMMU A d'exploiter les faiblesses de l'unité IOMMU A pour transférer une donnée non-partagée (attaque par canal caché ou "covert-channel attack") à un périphérique connecté sur l'unité IOMMU B car les unités IOMMU ne sont pas partagées. Appliquer cette solution à l'extrême en plaçant une unité IOMMU devant chaque périphérique comporterait plusieurs problèmes :
- ce n'est pas applicable pour les périphériques externes (ceux exposant un connecteur sur le système sur puce comme les périphériques de type PCI/PCI-Express) car on peut connecter plusieurs périphériques sur un même connecteur.
- un tel déploiement incrémente considérablement la surface nécessaire sur le système sur puce ce qui incrémente son coût et sa consommation.

Une solution comme celle proposée pour les unités de gestion mémoire MMU, comme dans les documents cités ci-dessus, pourrait être implémentée sur l'IOMMU mais, dans le cas d'ajouts d'aléas dans le temps de traitement d'une requête mémoire (cf article "Secure TLBs", Proceedings of the 46th International Symposium on Computer Architecture (ISCA), 2019), aucun scénario d'utilisation ne permet d'obtenir des performances équivalentes à une unité IOMMU non protégée. En effet, l'ajout d'absences de traductions présentes dans la mémoire tampon TLB dégrade les performances en termes de latence et de débit. Ce type de défense dégrade les performances des entrées/sorties significativement même lorsqu'un seul périphérique effectue des transactions mémoire, sans pour autant réduire significativement le débit du canal caché. En effet, un attaquant peut utiliser un code correcteur d'erreur pour les bits d'informations transmis potentiellement fautés. En outre, les techniques de partitionnement de la mémoire tampon TLB ou de l'unité IOMMU ne permettent pas non plus d'obtenir des performances natives. Lorsque peu de périphériques utilisent l'unité IOMMU, le matériel est sous utilisé, et la situation devient finalement similaire au cas d'utilisation dans lequel on attacherait une unité IOMMU par périphérique.

Les solutions de l'état de l'art au niveau de l'unité de gestion mémoire MMU ne sont pas efficaces dans le cas d'une attaque par canal caché ou "covert channel" car un attaquant peut les contourner. De plus, elles ne sont pas optimisées pour le trafic mémoire généré par un périphérique.

Un but de l'invention est de pallier les problèmes précédemment cités, et notamment de limiter ce type d'attaques sur l'unité de gestion IOMMU des accès à la mémoire partagée du processeur par des périphériques.

Il est proposé, selon un aspect de l'invention, un système sur puce comprenant :
- un processeur muni d'au moins un cœur ;
- une mémoire principale partagée munie d'une table de pages d'entrées/sorties ;
- un dispositif d'interconnexions des éléments du système ; et
- au moins une unité de gestion des accès à la mémoire partagée du processeur par des périphériques au système configurés pour adresser des requêtes au processeur comprenant :
   - une mémoire tampon de traductions munie, pour chaque entrée correspondant à une traduction d'une page virtuelle en une page physique permettant de traduire des transactions issues des périphériques à destination du système, d'un bit de réservation additionnel représentatif d'un état de réservation ou non d'une entrée de traduction de la mémoire tampon pour un périphérique ; et
   - un circuit logique associé à la mémoire tampon de traductions, configuré pour gérer le bit de réservation de sorte à éviter de remplacer une entrée de traduction de la mémoire tampon correspondant à une traduction lorsque le bit de réservation de la ligne a une valeur correspondant à un état réservé, et configuré pour, de manière sporadique à distance d'interarrivée bornée, remettre l'ensemble des bits de réservations des entrées de la mémoire tampon à l'état non-réservé.

On entend par événement sporadique avec distance d'interarrivée bornée, un événement répétitif pour lequel on définit une borne minimale et une borne maximale pour la durée séparant deux occurrences de l'évènement.

Selon un mode de réalisation, le circuit logique est configuré, lorsqu'une traduction demandée par une requête mémoire d'un périphérique est présente dans la mémoire tampon, pour traduire l'adresse et la transférer à la mémoire principale partagée, et tester si le bit de réservation de l'entrée correspond à une non-réservation, auquel cas le circuit logique réserve l'entrée pour ledit périphérique.

Dans un mode de réalisation, le circuit logique est configuré, lorsqu'une traduction demandée par une requête mémoire d'un périphérique est absente dans la mémoire tampon, pour la chercher dans la table de pages d'entrées/sorties au moyen d'un module de pointeur courant de page des tables, et en cas de non-obtention de la traduction dans la table de pages d'entrées/sorties, pour lever une interruption à destination du cœur correspondant.

Selon un mode de réalisation, le circuit logique est configuré, en cas d'obtention de la traduction dans la table de pages d'entrées/sorties, pour chercher la présence d'une entrée invalide dans la mémoire tampon, et en cas de présence d'une entrée invalide dans la mémoire tampon, pour allouer l'entrée invalide de la mémoire tampon à la ladite traduction et l'y écrire.

Lorsque le logiciel contrôlant l'unité, typiquement l'OS, révoque l'accès à certaines zones mémoire pour un périphérique, il supprime la traduction de l'adresse dans la table des pages d'entrées/sorties en mémoire. Il envoie également une commande d'invalidation de la traduction à l'unité de gestion des accès de périphériques. Lorsque l'unité de gestion des accès de périphériques invalide une entrée, elle invalide l'entrée de la mémoire tampon TLB rendant impossible tout accès ultérieur à la donnée.

Dans un mode de réalisation, le circuit logique est configuré, en cas d'obtention de la traduction dans la table de pages d'entrées/sorties, pour chercher la présence d'une entrée invalide dans la mémoire tampon, et en cas d'absence d'une entrée invalide dans la mémoire tampon, pour chercher la présence d'une entrée non-réservée dont le bit de réservation correspond à une non-réservation dans la mémoire tampon, et en cas de présence d'une entrée non-réservée dans la mémoire tampon, pour allouer l'entrée non-réservée de la mémoire tampon à la ladite traduction et l'y écrire.

Selon un mode de réalisation, le circuit logique est configuré, en cas d'obtention de la traduction dans la table de pages d'entrées/sorties, pour chercher la présence d'une entrée invalide dans la mémoire tampon, et en cas d'absence d'une entrée invalide dans la mémoire tampon, pour chercher la présence d'une entrée non-réservée dont le bit de réservation correspond à une non-réservation dans la mémoire tampon, et en cas d'absence d'une entrée non-réservée dans la mémoire tampon, pour chercher la présence d'une entrée réservée dont le bit de réservation correspond à une réservation dans la mémoire tampon dont la transaction est en cours de traitement, pour allouer l'entrée réservée dont la transaction est en cours de traitement à la ladite traduction et l'y écrire.

Selon un mode de réalisation, l'unité de gestion des accès de périphériques à la mémoire partagée du système sur puce est configurée pour être réservée à des périphériques n'étant pas prédéfinis comme de confiance.

Dans un mode de réalisation, le processeur est également muni d'au moins une unité de gestion de mémoire, et d'une table de pages d'unité de gestion de mémoire.

L'invention sera mieux comprise à l'étude de quelques modes de réalisation décrits à titre d'exemples nullement limitatifs et illustrés par les dessins annexés sur lesquels les figures:
[Fig.1] illustre schématiquement un système sur puce comprenant un processeur et au moins une unité de gestion des accès à la mémoire partagée du processeur par des périphériques, selon l'état de la technique ;
[Fig.2] illustre schématiquement un système sur puce comprenant un processeur et au moins une unité de gestion des accès à la mémoire partagée du processeur par des périphériques, selon un aspect de l'invention ;
[Fig.3] illustre schématiquement les entrées d'une mémoire tampon du système sur puce de la [Fig.2], selon un aspect de l'invention ;
[Fig.4] illustre schématiquement le fonctionnement du système sur puce de la [Fig.2], selon un aspect de l'invention ;
[Fig.5] illustre schématiquement la sortie positive du test 3 de la [Fig.4], selon un aspect de l'invention ;
[Fig.6] illustre schématiquement la sortie négative du test 3 de la [Fig.4], selon un aspect de l'invention ;
[Fig.7] illustre schématiquement la sortie positive du test 7 de la [Fig.4], selon un aspect de l'invention ;
[Fig.8] illustre schématiquement la sortie positive du test 9 de la [Fig.4], selon un aspect de l'invention ;
[Fig.9] illustre schématiquement la sortie positive du test 11 de la [Fig.4], selon un aspect de l'invention ;
[Fig.10] illustre schématiquement la sortie négative du test 11 de la [Fig.4], selon un aspect de l'invention ;
[Fig.11] illustre schématiquement un système sur puce comprenant un processeur et au moins une unité de gestion des accès à la mémoire partagée du processeur par des périphériques, selon un aspect de l'invention, et au moins une unité de gestion de l'état de l'art des accès à la mémoire partagée du processeur par des périphériques ;
[Fig.12] illustre schématiquement un système sur puce comprenant un processeur et au moins une unité de gestion des accès à la mémoire partagée du processeur par des périphériques, couplée à un contrôleur de bus de périphériques, selon un aspect de l'invention.

Sur l'ensemble des figures, les éléments ayant des références identiques sont similaires.

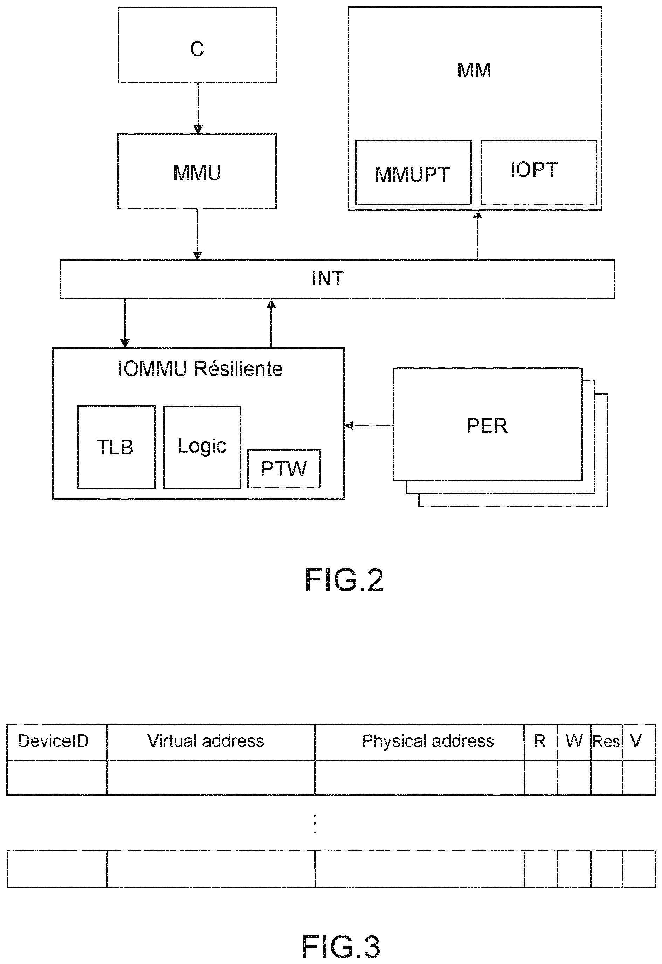

La [Fig.2] représente schématiquement, selon un aspect de l'invention, un système sur puce comprenant :
- un processeur muni d'au moins un cœur C et d'au moins une unité de gestion de mémoire MMU ;
- une mémoire principale MM partagée, par exemple munie d'une table de pages d'entrées/sorties IOPT et d'une table de pages d'unité de gestion de mémoire MMUPT ;
- un dispositif d'interconnexions INT des éléments du système ; et
- au moins une unité IOMMU de gestion des accès de périphériques PER à la mémoire partagée du système sur puce, configurée pour adresser des requêtes au processeur, comprenant :
   - une mémoire tampon TLB de traductions munie, pour chaque entrée correspondant à une traduction d'une page virtuelle en une page physique permettant de traduire des transactions issues des périphériques PER à destination du système, d'un bit de réservation Res additionnel représentatif d'un état de réservation ou non d'une entrée de traduction de la mémoire tampon TLB pour un périphérique ; et
   - un circuit logique Logic associé à la mémoire tampon TLB de traductions, configuré pour gérer le bit de réservation Res de sorte à éviter de remplacer une entrée de traduction de la mémoire tampon TLB correspondant à une traduction lorsque le bit de réservation Res de la ligne a une valeur correspondant à un état réservé, et configuré pour, de manière sporadique à distance d'inter-arrivée bornée, remettre l'ensemble des bits de réservations des entrées de la mémoire tampon TLB à l'état non-réservé.

L'invention consiste en une politique de remplacement des entrées de la mémoire tampon TLB pour une unité IOMMU. Cette politique alloue dynamiquement les entrés de la mémoire tampon TLB à un périphérique pour un intervalle de temps, puis les remet en jeu lorsque cet intervalle de temps est écoulé.

La présente invention a pour principal avantage de réduire ou empêcher l'exploitation du canal caché que deux périphériques peuvent mettre en place tout en gardant des performances très proches des performances nominales d'une unité IOMMU classique.

La [Fig.3] représente schématiquement les entrées d'une mémoire tampon du système sur puce de la [Fig.2], selon un aspect de l'invention.

Comparée à une mémoire tampon TLB de l'état de l'art, la mémoire tampon TLB de l'invention est telle qu'une de ses entrées comprend en plus des autres champs, un champ correspondant à un bit de réservation Res.

Ainsi, une entrée de la mémoire tampon TLB, comprend les champs suivants :
- devicelD : identifiant utilisé par l'unité IOMMU pour identifier le ou les périphériques auxquels la traduction s'applique ;
- Virtual address : adresse virtuelle de la base de la page utilisée par les périphériques ;
- Physical address : adresse physique de la base de la page utilisée pour router les requêtes des périphériques en mémoire ;
- R : bit indiquant l'autorisation ou non en lecture de la page (virtuelle ou physique) par le périphérique correspondant ;
- W : bit indiquant l'autorisation ou non en écriture de la page (virtuelle ou physique) par le périphérique correspondant ;
- Res : bit indiquant la réservation ou non de l'entrée au périphérique correspondant (au devicelD).

On entend par base de la page, l'adresse marquant le début d'une zone mémoire de taille prédéfinie.

Le principe de fonctionnement de la protection contre les attaques par canaux cachés est de limiter la possibilité entre deux périphériques de créer des collisions d'accès au niveau de la mémoire tampon TLB de l'unité IOMMU.

Pour cela on attribue chaque entrée de la mémoire tampon TLB à un périphérique pendant une période. Une entrée de la mémoire tampon TLB associée à un périphérique ne peut voir son contenu remplacé que par d'autres traductions appartenant à ce même périphérique, de ce fait limitant la possibilité de collisions d'accès, au niveau de la mémoire tampon TLB.

Le bit de réservation Res ajouté n'est pas accessible hors de l'unité IOMMU (par exemple par un périphérique ou par le système d'exploitation s'exécutant sur un cœur), et indique l'état réservé ou non d'une entrée de la mémoire tampon TLB.

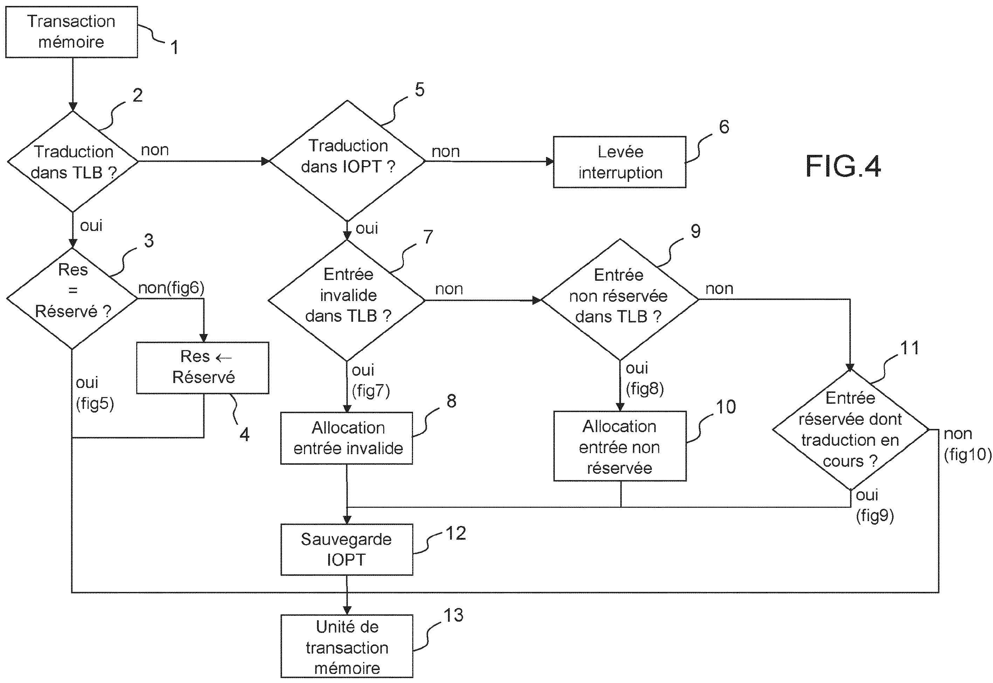

La [Fig.4] représente schématiquement le fonctionnement du système sur puce de la [Fig.2], selon un aspect de l'invention, ou en d'autres termes le procédé de traduction d'une transaction mémoire 1 mis en œuvre par le circuit logique Logic.

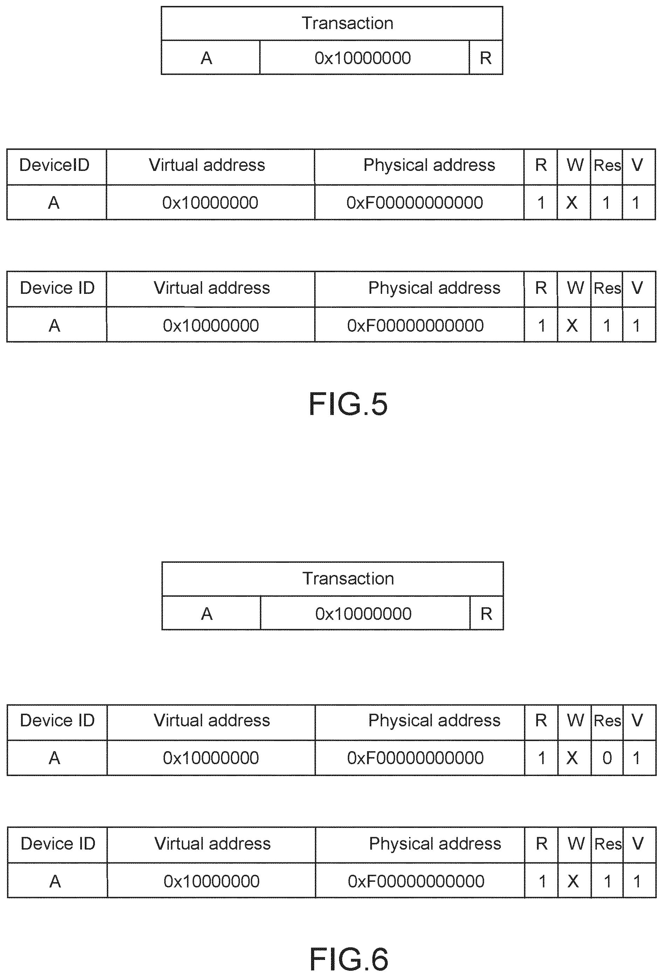

Lorsqu'une transaction mémoire 1 est reçue par l'unité IOMMU, comme illustré sur la [Fig.5], la mémoire tampon TLB est parcourue pour rechercher la traduction de l'adresse virtuelle en adresse physique. L'exemple utilise une mémoire tampon TLB à une entrée et sur les figures, les premiers tableaux TLB avant traduction et les seconds tableaux TLB après traduction.

Si une traduction est trouvée dans la mémoire tampon TLB (sortie positive du test 2) et si son entrée est réservée (sortie positive du test 3), l'adresse virtuelle est traduite en adresse physique et est transférée à la mémoire principale, comme représenté sur la [Fig.5].

Le deuxième tableau et le troisième tableau de la [Fig.5] sont identiques car la traduction est trouvée dans la mémoire tampon TLB, il n'y a donc pas besoin de remplacer l'entrée du TLB.

Si l'entrée ayant permis la traduction de la transaction n'est pas réservée (sortie négative du test 3), i.e. dont le bit de réservation Res indique une non-réservation, alors l'unité IOMMU la réserve pour le périphérique correspondant, comme représenté sur la [Fig.6], en mettant le bit de réservation Res à réservé.

Lorsque la traduction n'est pas dans la mémoire tampon TLB (sortie négaitive du test 2), l'unité IOMMU parcourt la table des pages IOPT pour trouver la traduction (test 5), au moyen d'un module PTW de pointeur courant, pouvant être réalisé de manière matérielle ou logicielle.

Si aucune traduction n'est trouvée dans la table des pages IOPT (sortie négative du test 5), alors l'unitélOMMU lève une interruption 6 (défaut de page ou "page fault") en direction du cœur C, comme illustré sur la [Fig.4].

Si l'unité IOMMU trouve la traduction dans la table des pages IOPT (sortie positive du test 5), elle évalue plusieurs conditions successives pour choisir l'entrée à remplacer dans la mémoire tampon TLB, comme suit.

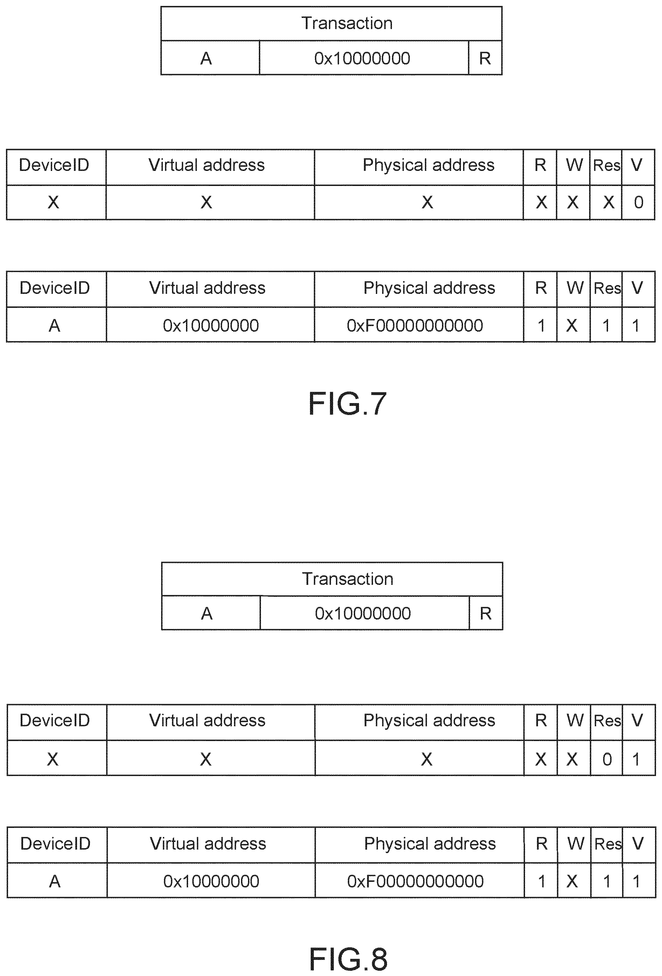

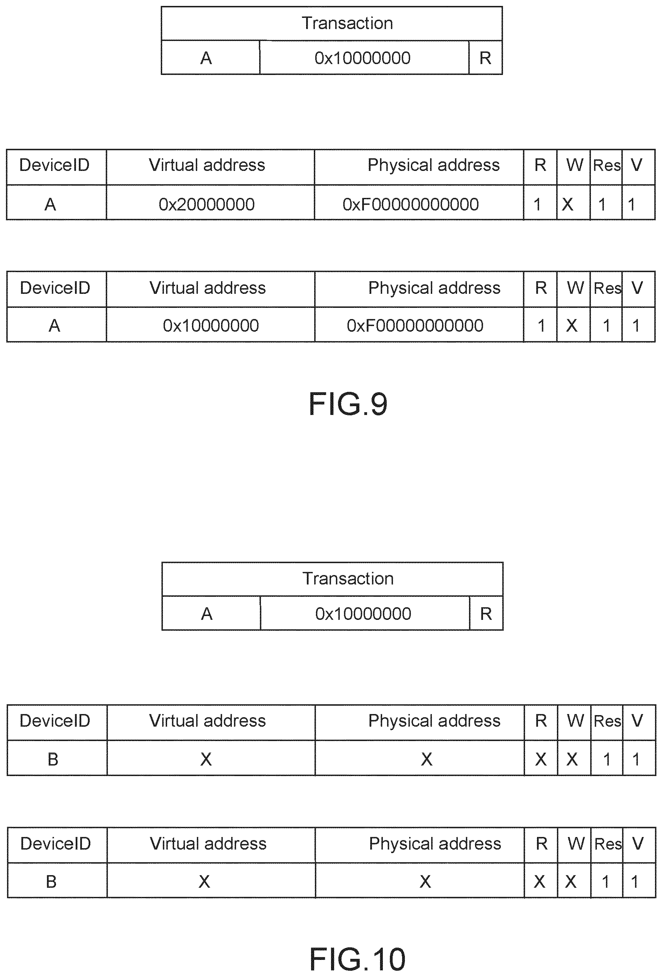

L'entrée est alors choisie dans l'ordre de priorité suivant :
- une entrée invalide (sortie positive du test 7), qui est allouée 8, comme illustré sur la [Fig.7].
- une entrée ré-allouable (sortie positive du test 9 suite à sortie négative du test 7), qui est ré-allouée 10, jusqu'à la fin de la période, comme illustré sur la [Fig.8].
- une entrée déjà allouée (sortie positive du test 11 suite à sortie négative du test 9), comme illustré sur la [Fig.9] (en remplacement d'une entrée appartenant déjà au périphérique dont la transaction est en cours de traitement). Aucune entrée du TLB n'est disponible à la réallocation donc il n'y a pas de réallocation à faire.

Dans les trois cas 8, 10 et sortie positive du test 11, une sauvegarde 12 de la table de pages d'entrées/sorties IOPT est effectuée, et une réservation de l'entrée pour le périphérique effectuant la transaction.

Si aucune des conditions n'est remplie, (sortie négative du test 11) la transaction est traduite et transmise à la mémoire principale MM sans sauvegarder la traduction dans la mémoire tampon TLB, comme illustré sur la [Fig.10].

Enfin, la suite de la transaction mémoire 13 est effectuée.

Ce mécanisme d'allocation des entrées est complémenté d'un mécanisme de ré-allocation (ou remise en jeu) des entrées de la mémoire tampon TLB. Ce mécanisme est sporadique avec distance d'interarrivée bornée, et consiste en la réinitialisation de tous les bits ou champs Res de la mémoire tampon TLB, en les remettant à zéro (dans le cas où 0 signifie non-réservé ou 1 signifie réservé), ce faisant supprimant les réservations de toutes les entrées de la mémoire tampon TLB.

Cependant, les entrées dont la réservation a été supprimée ne sont pas invalidées, et ce faisant un périphérique peut réutiliser une entrée qui lui a été non-réservée sans souffrir d'une absence de la traduction dans la mémoire tampon TLB ou "TLB miss" en langue anglaise. De plus, il est impossible pour un périphérique appartenant à un autre périphérique de faire la différence entre la récupération d'une entrée invalide et la récupération d'un entrée précédement allouée à un autre périphérique. Les entrées sont remises en jeu sporadiquement pour éviter que les périphériques puissent se synchroniser sur la période de réallocation des entrées de la mémoire tampon TLB pour ré-implémenter l'attaque avec un débit plus faible (la fréquence des échanges deviendrait la fréquence de réallocation au lieu d'être la fréquence de traitement des requêtes par l'unité IOMMU).

La présente invention permet de très fortement limiter les collisions d'accès entre deux périphériques au niveau de la mémoire tampon TLB de l'IOMMU comme les périphériques ne sont plus capables d'éjecter les traductions d'autres périphériques hors de la mémoire tampon TLB en dehors des périodes de réallocation des entrées. De ce fait, le débit du canal caché est limité rendant le canal caché inexploitable.

La présente invention permet également de conserver des performances proches des performances natives d'une unité IOMMU classique pour des accès classiques de périphériques. Aussi, on peut classer les périphériques en deux catégories :
- les périphériques réseau, recevant des données venant de l'extérieur du système, qui sont transmises en un burst (ou séquence de données relativement courte mais émise à la vitesse maximale pendant la fenêtre accordée à l'émetteur) en écritures mémoire. Les paquets sortant du système sont récupérés par un burst de lectures puis transmis hors du système. Les transactions ont une très forte localité car elles sont toujours destinées au buffer ou mémoire tampon de réception ou à destination du buffer ou mémoire tampon de transmission du noyau ou "kernel" en langue anglaise.
- les accélérateurs de calculs qui chargent les opérandes de calcul depuis la mémoire principale en burst de lecture, les données sont ensuite traitées en cantonnant l'exécution à leur mémoire interne du périphérique, finalement les données de sortie sont transmises en mémoire principale par un burst en écriture.

Ces deux types de périphériques font des accès mémoire qui ont généralement une forte localité, i.e. les adresses virtuelles des accès mémoires sont proches les unes des autres. Ils diffèrent par la régularité de leurs accès : les accès d'un périphérique réseau sont assez sporadiques alors que les accès d'un accélérateur sont périodiques et réguliers. De ce fait il est très improbable qu'un périphérique puisse utiliser toutes les entrées d'une mémoire tampon TLB dans un court intervalle de temps. Il est très improbable qu'un périphérique réserve toute une mémoire tampon TLB car les données que manipulent les périphériques ont souvent une forte localité. Donc plusieurs périphériques peuvent fonctionner en parallèle sans interférences dues au système d'allocation des entrées de la mémoire tampon TLB. Seul des accès malicieux seront impactés par ce mécanisme.

Aussi, la présente invention visant au remplacement des entrées d'une mémoire tampon TLB permet de :
- réduire la surface d'attaque liée aux attaques par canaux cachés les attaques par canaux cachés utilisant le temps de traduction d'une transaction mémoire par l'IOMMU pour échanger de l'information.
- d'avoir des performances nominales lorsque les accès mémoire des périphériques ne réservent pas toute une mémoire tampon TLB.
- ne pas avoir de famine, i.e. toutes les requêtes des périphériques seront servies. Si un périphérique ne peut pas obtenir d'entrées dans la mémoire tampon TLB, ses requêtes sont traduites sans être cachées. On peut donc observer une dégradation de performance sans pour autant observer de famine.

A minima un système sur puce avec des périphériques (internes ou externes) maîtres mais pas de confiance, doit contenir une unité IOMMU selon l'invention, résiliente aux attaques de type canal auxiliaire ou canal caché. Tous les périphériques maitres (de confiance ou de non-confiance) doivent être connectés au reste du système au travers de cette IOMMU.

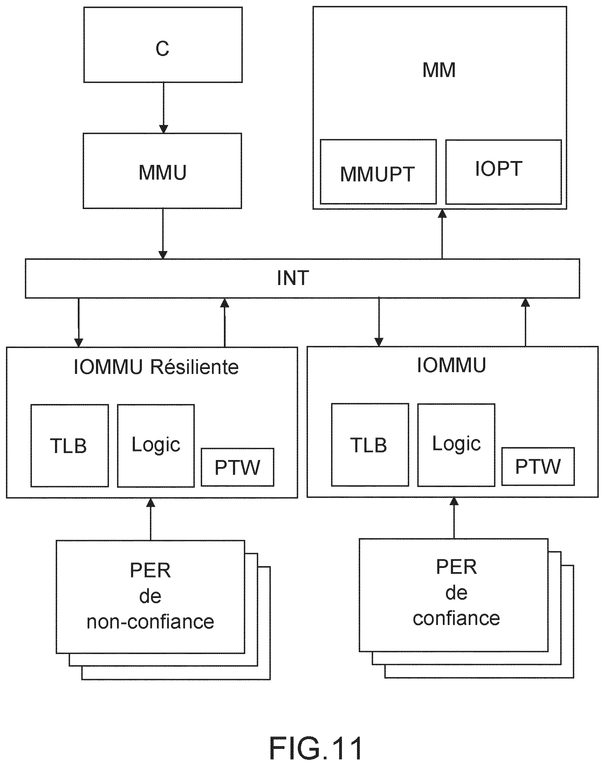

Si les contraintes de surface et coût ne sont pas fortement limitées le système sur puce peut contenir deux unités IOMMU, une résiliente aux attaques selon l'invention, et une traditionnelle (i.e. non-résiliente), comme illustré sur la [Fig.11]. Sur l'IOMMU traditionnelle, les périphériques maîtres internes de confiance peuvent être connectés. Tous les autres périphériques (non maîtres) doivent être connectés sur l'unité IOMMU résiliente selon l'invention.

Tous les périphériques externes, de confiance ou non, doivent être connectés sur l'unité IOMMU résiliente. La raison étant que tout périphérique externe (e.g. périphérique connecté sur une prise PCI/PCI-Express) peut être facilement remplacé par un autre périphérique malveillant.

Cette réalisation avec une IOMMU traditionnelle et une IOMMU résiliente peut permettre aux périphériques internes de confiance sur l'unité IOMMU traditionnelle d'éviter la légère dégradation de performances que l'unité IOMMU résiliente peut entrainer.

Cette réalisation combinant l'unité IOMMU traditionnelle et l'unité IOMMU résiliente selon l'invention peut être étendue selon les contraintes de surface et coût du système sur puce pour des raisons de performances, par exemple, avec deux unités IOMMUs traditionnelles et une unité IOMMU résiliente selon l'invention, ou encore avec une unité IOMMU traditionnelle et trois unités IOMMU résilientes. Néanmoins, sur les unités IOMMU traditionnelles seuls des périphériques internes de confiance doivent être connectés. Préférentiellement, on multiplie les mémoires tampons TLB de traductions dans une grosse IOMMU, plutôt que de multiplier les IOMMU.

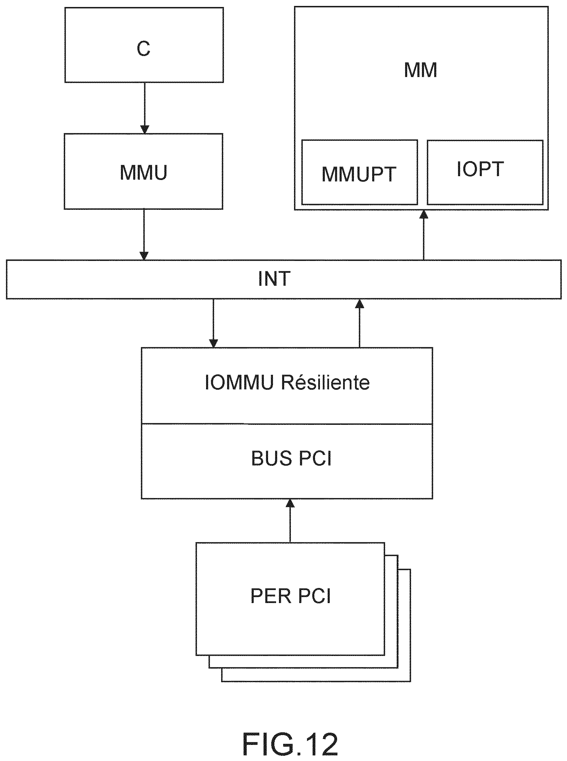

Dans certains cas, toujours pour des questions de performances, l'unité IOMMU résiliente selon l'invention peut être fortement couplée à un contrôleur de bus de périphériques, comme par exemple au contrôleur racine d'un bus PCI/PCI-Express, comme illustré sur la [Fig.12].

L'invention a vocation à être utilisée dans les unités IOMMU des systèmes sur puce pour lesquels des périphériques maîtres (e.g. accélérateur de chiffrement, interface réseau, GPUs, TPUs, réseau de neurones, ...) sont utilisés, et particulièrement lorsque les périphériques sont développés par des tiers et ceux-ci manipulent des données sensibles.

L'invention s'applique aux systèmes avec périphériques externes (e.g. carte réseau, carte graphique,...), mais aussi aux systèmes avec des périphériques internes (i.e. périphériques intégrés dans le système sur puce). Par exemple, quand un système sur puce basé sur RISC-V est développé en utilisant des périphériques implémentés par un tiers. Ces périphériques peuvent être difficiles à vérifier car leur blocs IP (pour acronyme de "Intellectual Property" en langue anglaise) sont fermés (pas d'accès à sa conception) et/ou bloc IP complexe. Placer ces périphériques derrière une unité IOMMU intégrant la présente invention assure que ceux-ci ne peuvent pas réaliser des attaques de type canal auxiliaire ou canal caché. Ceci évite aussi des solutions plus coûteuses comme celle de placer une unité IOMMU différente devant chaque périphérique.

## Revendications

1. Système sur puce comprenant :
- un processeur muni d'au moins un cœur (C) ;
- une mémoire principale (MM) partagée munie d'une table de pages d'entrées/sorties (IOPT) ;
- un dispositif d'interconnexions (INT) des éléments du système ; et
- au moins une unité (IOMMU) de gestion des accès de périphériques (PER) à la mémoire partagée du système sur puce, configurée pour adresser des requêtes au processeur, comprenant :
- une mémoire tampon (TLB) de traductions munie, pour chaque entrée correspondant à une traduction d'une page virtuelle en une page physique permettant de traduire des transactions issues des périphériques (PER) à destination du système, d'un bit de réservation (Res) additionnel représentatif d'un état de réservation ou non d'une entrée de traduction de la mémoire tampon (TLB) pour un périphérique ; et
- un circuit logique (Logic) associé à la mémoire tampon (TLB) de traductions, configuré pour gérer le bit de réservation (Res) de sorte à éviter de remplacer une entrée de traduction de la mémoire tampon (TLB) correspondant à une traduction lorsque le bit de réservation (Res) de la ligne a une valeur correspondant à un état réservé, et configuré pour, de manière sporadique à distance d'interarrivée bornée, remettre l'ensemble des bits de réservations des entrées de la mémoire tampon (TLB) à l'état non-réservé.

2. Système selon la revendication 1, dans lequel le circuit logique (Logic) est configuré, lorsqu'une traduction demandée par une requête mémoire (1) d'un périphérique est présente (2) dans la mémoire tampon (TLB), pour traduire l'adresse et la transférer à la mémoire principale partagée (MM), et tester (3) si le bit de réservation (Res) de l'entrée correspond à une non-réservation, auquel cas le circuit logique (Logic) réserve l'entrée pour ledit périphérique.

3. Système selon la revendication 2, dans lequel le circuit logique (Logic) est configuré, lorsqu'une traduction demandée par une requête mémoire d'un périphérique est absente dans la mémoire tampon (TLB), pour la chercher dans la table de pages d'entrées/sorties (IOPT) au moyen d'un module (PTW) de pointeur courant de page des tables, et en cas de non-obtention de la traduction dans la table de pages d'entrées/sorties (IOPT), pour lever une interruption à destination du cœur (C) correspondant.

4. Système selon la revendication 3, dans lequel le circuit logique (Logic) est configuré, en cas d'obtention de la traduction dans la table de pages d'entrées/sorties (IOPT), pour chercher la présence d'une entrée invalide dans la mémoire tampon (TLB), et en cas de présence d'une entrée invalide dans la mémoire tampon (TLB), pour allouer l'entrée invalide de la mémoire tampon (TLB) à la ladite traduction et l'y écrire.

5. Système selon la revendication 3 ou 4, dans lequel, le circuit logique (Logic) est configuré, en cas d'obtention de la traduction dans la table de pages d'entrées/sorties (IOPT), pour chercher la présence d'une entrée invalide dans la mémoire tampon (TLB), et en cas d'absence d'une entrée invalide dans la mémoire tampon (TLB), pour chercher la présence d'une entrée non-réservée dont le bit de réservation (Res) correspond à une non-réservation dans la mémoire tampon (TLB), et en cas de présence d'une entrée non-réservée dans la mémoire tampon (TLB), pour allouer l'entrée non-réservée de la mémoire tampon (TLB) à la ladite traduction et l'y écrire.

6. Système selon l'une des revendications 3 à 5, dans lequel, le circuit logique (Logic) est configuré, en cas d'obtention de la traduction dans la table de pages d'entrées/sorties (IOPT), pour chercher la présence d'une entrée invalide dans la mémoire tampon (TLB), et en cas d'absence d'une entrée invalide dans la mémoire tampon (TLB), pour chercher la présence d'une entrée non-réservée dont le bit de réservation (Res) correspond à une non-réservation dans la mémoire tampon (TLB), et en cas d'absence d'une entrée non-réservée dans la mémoire tampon (TLB), pour chercher la présence d'une entrée réservée dont le bit de réservation (Res) correspond à une réservation dans la mémoire tampon (TLB) dont la transaction est en cours de traitement, pour allouer l'entrée réservée dont la transaction est en cours de traitement à la ladite traduction et l'y écrire.

7. Système selon l'une des revendications précédentes, dans lequel l'unité (IOMMU) de gestion des accès de périphériques (PER) à la mémoire partagée du système sur puce est configurée pour être réservée à des périphériques n'étant pas prédéfinis comme de confiance.

8. Système selon l'une des revendications précédentes, dans lequel le processeur est également muni d'au moins une unité de gestion de mémoire (MMU), et d'une table de pages d'unité de gestion de mémoire (MMUPT).

## Patentansprüche

1. System-on-Chip, umfassend:
- einen Prozessor, der mit mindestens einem Core (C) versehen ist;
- einen gemeinsam genutzten Hauptspeicher (MM), der mit einer Eingangs/Ausgangsseitentabelle (IOPT) versehen ist;
- eine Verknüpfungsvorrichtung (INT) für die Elemente des Systems; und
- mindestens eine Verwaltungseinheit (IOMMU) für die Zugriffe von Peripherien (PER) auf den gemeinsam genutzten Speicher des Systems-on-Chip, die konfiguriert ist, um Anfragen an den Prozessor zu adressieren, umfassend:
- einen Übersetzungspufferspeicher (TLB), der für jeden Eingang, der einer Übersetzung einer virtuellen Seite in eine physische Seite entspricht, die erlaubt, aus den Peripherien (PER) stammende Transaktionen für das System zu übersetzen, mit einem zusätzlichen Reservierungsbit (Res) versehen ist, das repräsentativ für einen Reservierungsstatus oder nicht eines Übersetzungseingangs aus dem Pufferspeicher (TLB) für eine Peripherie ist; und
- eine Logikschaltung (Logic), die dem Übersetzungspufferspeicher (TLB) zugeordnet ist, die konfiguriert ist, um das Reservierungsbit (Res) zu verwalten, um zu vermeiden, einen Übersetzungseingang aus dem Pufferspeicher (TLB), der einer Übersetzung entspricht, wenn das Reservierungsbit (Res) der Zeile einen Wert aufweist, der einem reservierten Status entspricht, zu ersetzen, und konfiguriert ist, um, sporadisch auf beschränktem Zwischenankunftsabstand, die Gesamtheit der Reservierungsbits der Eingänge aus dem Pufferspeicher (TLB) in den nicht reservierten Status zurückzusetzen.

2. System nach Anspruch 1, wobei die Logikschaltung (Logic) konfiguriert ist, um, wenn eine durch eine Speicheranfrage (1) einer Peripherie angefragte Übersetzung im Pufferspeicher (TLB) vorhanden (2) ist, die Adresse zu übersetzen, und sie an den gemeinsam genutzten Hauptspeicher (MM) weiterzuleiten, und zu testen (3), ob das Reservierungsbit (Res) des Eingangs einer Nicht-Reservierung entspricht, in welchem Fall die Logikschaltung (Logic) den Eingang für die Peripherie reserviert.

3. System nach Anspruch 2, wobei die Logikschaltung (Logic) konfiguriert ist, um, wenn eine durch eine Speicheranfrage einer Peripherie angefragte Übersetzung im Pufferspeicher (TLB) nicht vorhanden ist, sie in der Eingangs/Ausgangsseitentabelle (IOPT) mittels eines geläufigen Seiten-Zeigermoduls (PTW) der Tabellen zu suchen, und um im Falle eines Nicht-Erhaltens der Übersetzung in der Eingangs/Ausgangsseitentabelle (IOPT), eine Unterbrechung zum entsprechenden Core (C) aufzuheben.

4. System nach Anspruch 3, wobei die Logikschaltung (Logic) konfiguriert ist, um im Falle eines Erhaltens der Übersetzung in der Eingangs-/Ausgangsseitentabelle (IOPT) nach dem Vorhandensein eines ungültigen Eingangs im Pufferspeicher (TLB) zu suchen, und im Falle eines Vorhandenseins eines ungültigen Eingangs im Pufferspeicher (TLB), den ungültigen Eingang des Pufferspeichers (TLB) der Übersetzung zuzuweisen und sie dort einzuschreiben.

5. System nach Anspruch 3 oder 4, wobei die Logikschaltung (Logic) konfiguriert ist, um im Falle eines Erhaltens der Übersetzung in der Eingangs-/Ausgangsseitentabelle (IOPT) nach dem Vorhandensein eines ungültigen Eingangs im Pufferspeicher (TLB) zu suchen, und im Falle eines Nicht-Vorhandenseins eines ungültigen Eingangs im Pufferspeicher (TLB), nach dem Vorhandensein eines nicht reservierten Eingangs zu suchen, dessen Reservierungsbit (Res) einer Nicht-Reservierung im Pufferspeicher (TLB) entspricht, und um im Falle eines Vorhandenseins eines nicht reservierten Eingangs im Pufferspeicher (TLB), den nicht reservierten Eingang des Pufferspeichers (TLB) der Übersetzung zuzuweisen und sie dort einzuschreiben.

6. System nach einem der Ansprüche 3 bis 5, wobei die Logikschaltung (Logic) konfiguriert ist, um im Falle eines Erhaltens der Übersetzung in der Eingangs-/Ausgangsseitentabelle (IOPT) nach dem Vorhandensein eines ungültigen Eingangs im Pufferspeicher (TLB) zu suchen, und im Falle eines Nicht-Vorhandenseins eines ungültigen Eingangs im Pufferspeicher (TLB), nach dem Vorhandensein eines nicht reservierten Eingangs zu suchen, dessen Reservierungsbit (Res) einer Nicht-Reservierung im Pufferspeicher (TLB) entspricht, und um im Falle eines Nicht-Vorhandenseins eines nicht reservierten Eingangs im Pufferspeicher (TLB) nach dem Vorhandensein eines reservierten Eingangs zu suchen, dessen Reservierungsbit (Res) einer Reservierung im Pufferspeicher (TLB) entspricht, deren Transaktion gerade bearbeitet wird, um den reservierten Eingang, dessen Transaktion gerade bearbeitet wird, der Übersetzung zuzuweisen und sie dort einzuschreiben.

7. System nach einem der vorstehenden Ansprüche, wobei die Verwaltungseinheit (IOMMU) für die Zugriffe von Peripherien (PER) auf den gemeinsam genutzten Speicher des Systems-on-Chip konfiguriert ist, um für Peripherien reserviert zu werden, die nicht als vertrauenswürdig vordefiniert sind.

8. System nach einem der vorstehenden Ansprüche, wobei der Prozessor auch mit mindestens einer Speicherverwaltungseinheit (MMU), und einer Speicherverwaltungseinheitsseitentabelle (MMUPT) versehen ist.

## Claims

1. System-on-chip comprising:
- a processor provided with at least one core (C);
- a shared main memory (MM) provided with an input/output page table (IOPT);
- a device (INT) for interconnecting elements of the system; and
- at least one unit (IOMMU) for managing peripheral (PER) access to the shared memory of the system-on-chip, configured to send requests to the processor, comprising:
- a translation lookaside buffer (TLB) provided, for each entry corresponding to a translation of a virtual page to a physical page enabling the translation of transactions from the peripherals (PER) to the system, with an additional reservation bit (Res) representative of a reserved or unreserved state of a translation entry in the lookaside buffer (TLB) for a peripheral; and
- a logic circuit (Logic) associated with the translation lookaside buffer (TLB), configured to manage the reservation bit (Res) so as to avoid replacing a translation entry in the lookaside buffer (TLB) corresponding to a translation when the reservation bit (Res) of the row has a value corresponding to a reserved state, and configured, sporadically at a bounded interarrival distance, to reset all of the reservation bits of the entries in the lookaside buffer (TLB) to the unreserved state.

2. System according to claim 1, wherein the logic circuit (Logic) is configured, when a translation requested by a memory request (1) of a peripheral is present (2) in the lookaside buffer (TLB), to translate the address and transfer it to the shared main memory (MM), and test (3) if the reservation bit (Res) of the entry corresponds to a non-reservation, in which case, the logic circuit (Logic) reserves the entry for said peripheral.

3. System according to claim 2, wherein the logic circuit (Logic) is configured, when a translation requested by a memory request of a peripheral is absent in the lookaside buffer (TLB), to search for it in the input/output page table (IOPT) by means of a page table walk (PTW) module, and in case of not obtaining the translation in the input/output page table (IOPT), to raise an interruption to the corresponding core (C).

4. System according to claim 3, wherein the logic circuit (Logic) is configured, in case of obtaining the translation in the input/output page table (IOPT), to search for the presence of an invalid entry in the lookaside buffer (TLB), and in case of presence of an invalid entry in the lookaside buffer (TLB), to allocate the invalid entry in the lookaside buffer (TLB) to said translation and write it there.

5. System according to claim 3 or 4, wherein, the logic circuit (Logic) is configured, in case of obtaining the translation in the input/output page table (IOPT), to search for the presence of an invalid entry in the lookaside buffer (TLB), and in case of absence of an invalid entry in the lookaside buffer (TLB), to search for the presence of a non-reserved entry, the reservation bit (Res) of which corresponds to a non-reservation in the lookaside buffer (TLB), and in case of presence of a non-reserved entry in the lookaside buffer (TLB), to allocate the non-reserved entry in the lookaside buffer (TLB) to said translation and write it there.

6. System according to any one of claims 3 to 5, wherein, the logic circuit (Logic) is configured, in case of obtaining the translation in the input/output page table (IOPT), to search for the presence of an invalid entry in the lookaside buffer (TLB), and in case of absence of an invalid entry in the lookaside buffer (TLB), to search for the presence of a non-reserved entry, the reservation bit (Res) of which corresponds to a non-reservation in the lookaside buffer (TLB), and in case of absence of a non-reserved entry in the lookaside buffer (TLB), to search for the presence of a reserved entry, the reservation bit (Res) of which corresponds to a reservation in the lookaside buffer (TLB), the transaction of which is being processed, to allocate the reserved entry, the transaction of which is being processed, to said translation and write it there.

7. System according to any one of the preceding claims, wherein the unit (IOMMU) for managing peripheral (PER) access to the shared memory of the system-on-chip is configured to be reserved at peripherals not being predefined as trustworthy.

8. System according to any one of the preceding claims, wherein the processor is also provided with at least one memory management unit (MMU), and a memory management unit page table (MMUPT).
